# EUROPEAN PATENT SPECIFICATION

(11) **EP 4 509 291 B1**
(45) Date of publication and mention of the grant of the patent: **31.12.2025**
(21) Application number: 24193302.7
(22) Date of filing: 07.08.2024
(51) Int. Cl.: B29C 64/118, B29C 64/232, B29C 64/236, B29C 64/241, B29C 64/245, B33Y 10/00, B33Y 30/00, B29C 65/74

(54) **ASSEMBLY AND METHOD FOR MAKING AN OBJECT**
ANORDNUNG UND VERFAHREN ZUR HERSTELLUNG EINES OBJEKTS
ENSEMBLE ET PROCÉDÉ DE FABRICATION D'UN OBJET

(30) Priority: 17.08.2023 US 202318234953
(43) Date of publication of application: 19.02.2025
(73) Proprietor: Bigus, Kazimierz, Woodside, NY 11377 (US)
(72) Inventor: Bigus, Kazimierz, Woodside, NY 11377 (US)
(74) Representative: Monteiro Alves, Inês

(56) References cited:
- CN-U- 211 763 518
- KR-A- 20220 105 176
- US-A1- 2018 186 038

## Description

The present invention generally relates to making a three-dimensional (3D) object using a 3D pen. More specifically, the present invention relates to an assembly for creating 3D objects from a template and a method of using the assembly to create the 3D object from the template.

Generally, 3D pens are used to create various two-dimensional (2D) and 3D objects "free-hand." 3D pens work by heating plastic filament and extruding it through a tip. As the plastic cools and hardens, it can be used to "draw" 3D objects. 3D pens are often used for prototyping and model-making, as they allow users to quickly create complex shapes.

For prototyping and model making, generally, a template can be used. The template incorporates multiple grooves and shapes to provide an outline for a 3D object to be build. The template is often made from silicon or plastics to facilitate the use of 3D pen.

Such "free hand" object building is inherently difficult, in large part, due to instability of the plastic prior to the plastic cooling and hardening. In other words, when the filament is extruded from the 3D pen, the filament remains unstable prior to its cooling and hardening, thereby causing improper and inaccurate 3D object formation.

Document US 2018/0186038 A1 discloses a device which allows for the creation of 2D, and 3D plastic objects, structures, or shapes using an ABS, or similar filament, extruded by a 3D drawing pen.

There is, therefore, a need for an assembly for creating 3D objects from the template that are distinguished by a precise and rigid structure.

### SUMMARY

In one aspect, the present invention provides a system according to claim 1 for creating three-dimensional (3D) objects from a template. The system has a base assembly with a frame and a platform on top of the frame. The platform is configured to rotate about a longitudinal axis. The base assembly has a rod, vertically protruding from the platform, and a slider assembly. The slider assembly has a slider pole securely fixed to the frame, a slider tool slidably and rotatably affixed to the slider pole through a central opening, and at least two horizontal rods configured to slide horizontally through corresponding side openings. A tightener for securing the horizontal rods in a predetermined position is also provided.

In another aspect, the present invention provides a method according to claim 10 for creating three-dimensional objects from a template. The method has steps of placing the template on a rotatable platform, creating two-dimensional (2D) shapes by use of a 3D pen from the template by rotating the template via the rotatable platform, and placing concentrically the 2D shapes about a rod vertically protruding from the rotatable platform. Additionally, the method can have the step of securing the 2D shapes by a slider assembly, wherein the slider assembly can have a slider pole securely fixed to the frame, a slider tool slidably and rotatably affixed to the slider pole through a central opening, and at least two horizontal rods configured to slide horizontally through corresponding side openings. The final step provides fusing the 2D shapes a filling layer from the template to create the 3D object.

In yet another aspect of the present invention, the template has grooves that form geometric and/or non-geometric shapes. For example, the grooves can form at least one predetermined shape defined by five concentric triangular path grooves with a straight line groove crossing vertically a center of the five triangular path grooves.

### BRIEF DESCRIPTION OF THE DRAWINGS

In order for the invention to be readily understood, a more particular description of the invention briefly described above will be rendered by reference to specific embodiments that are illustrated in the appended drawings. Understanding that these drawings depict only typical embodiments of the invention and are not therefore to be considered to be limiting of its scope, aspects of the invention will be described and explained with additional specificity and detail through the use of the accompanying drawings.
FIG. 1 depicts a diagram of a system for creating three-dimensional (3D) objects from a template according to embodiments of the invention;
FIG. 2 depicts a diagram of another embodiment of the system in accordance with embodiments of the invention;
FIG. 3 depicts a base assembly without the template of the system in accordance with embodiments of the invention;
FIG. 4 depicts a diagram of a slider assembly of the system in accordance with embodiments of the invention;
FIG. 5A depicts a diagram of the template in accordance with embodiments of the invention;
FIG. 5B depicts a diagram of the template in accordance with another embodiments of the invention;
FIG. 5C depicts a diagram of the template in accordance with yet another embodiments of the invention; and
FIG. 5D depicts a diagram of the template in accordance with yet another embodiments of the invention.

### DETAILED DESCRIPTION

Reference to "a specific embodiment" or a similar expression in the specification means that specific features, structures, or characteristics described in the specific embodiments are included in at least one specific embodiment of the present invention. Hence, the wording "in a specific embodiment" or a similar expression in this specification does not necessarily refer to the same specific embodiment.

Hereinafter, various embodiments of the present invention will be described in more detail with reference to the accompanying drawings. Nevertheless, it should be understood that the present invention could be modified by those skilled in the art in accordance with the following description to achieve the excellent results of the present invention. Therefore, the following description shall be considered as a pervasive and explanatory description related to the present invention for those skilled in the art, not intended to limit the claims of the present invention. Reference to "an embodiment," "a certain embodiment" or a similar expression in the specification means that related features, structures, or characteristics described in the embodiment are included in at least one embodiment of the present invention. Hence, the wording "in an embodiment," "in a certain embodiment" or a similar expression in this specification does not necessarily refer to the same specific embodiment.

The widespread of use of 3D printers, spearheaded the use of 3D free-hand pens. A free-hand 3D drawing pen uses plastic thread made from acrylonitrile butadiene styrene ("ABS"), polylactic acid ("PLA"), or "FLEXY", thermal polyurethane ("TPU"), or similar materials, that is first melted and then cooled to make 2-dimensional, and 3-dimensional objects by hand. Such "free-hand" 3D printing is inherently difficult due to instability of the plastic thread prior to cooling and hardening. When the plastic thread is extruded from the 3D pen, the plastic thread remains unstable prior to its cooling and hardening for a period of time thereby often causing the objects to be of poor quality, imprecise and not adhering to a desired specification.

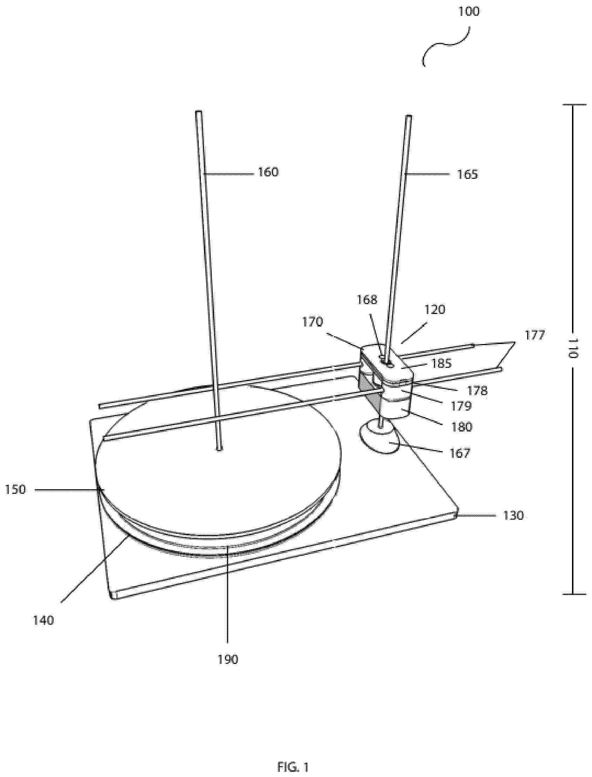

To address the forgoing issues the present invention provides a system for creating 3D objects from a template by using a 3D drawing pen. The system allows a precise, stable and high-quality of a 3D object when using a "free-hand" 3D printing. In particular, as described in FIGS. 1 to 5D, the system has a base assembly and a template with various geometric and non-geometric shapes that can be compatible with each other to build a 3D object.

FIG. 1 illustrates a system 100 for creating 3D objects from a template 150 by using a 3D drawing pen (not shown), in accordance with embodiment of the present invention. The system 100 is provided with a base assembly 110. The base assembly has a frame 130 and a platform 140. The frame 130 can be rectangular or square shape, while the platform 140 is, preferably, circular. The frame 130 can, preferably, have 20 to 25 centimeters (cm) in length and 16 cm to 20 cm in width. The platform 140 can, preferably, have a diameter of approximately 14 cm to 16 cm.

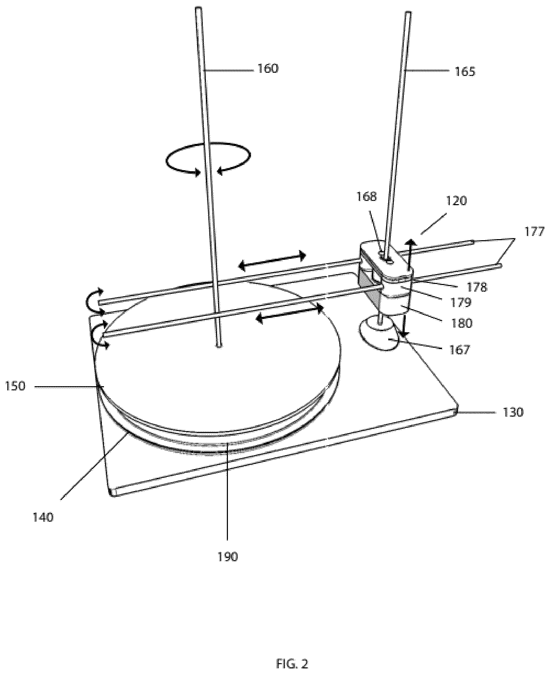

The platform 140 is positioned on top of the frame 130 and configured to rotate about a longitudinal axis (as shown in FIG. 2). In addition, the base assembly has a rod 160 that is vertically protruding from the platform 140 to concentrically accommodate the template 150.

As illustrated in FIGS. 1 and 2, base assembly 110 has a slider assembly 120 located adjacent to the platform 140 and disposed on top of the frame 130. The slider assembly 120 has a slider pole 165 securely fixed to the frame 130 through a slider pole support 167.

The slider pole 165 can have ruler markings, in centimeters and/or inches, applied via etching or other known technique. The slider pole 165, preferably, is made from a stainless steel composite.

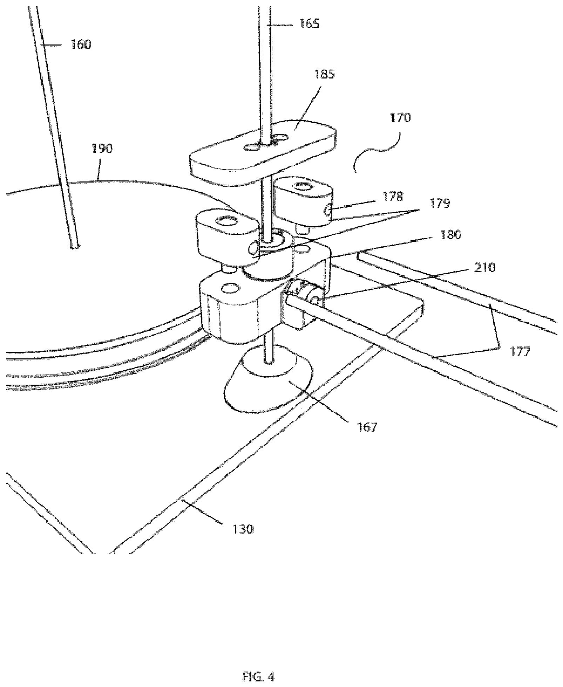

A slider tool (or piece) 170 slidably and rotatably affixed to the slider pole 165 through a central opening 168. At least two horizontal rods 177 configured to slide horizontally through corresponding side openings 178 (as shown in FIG. 2). The horizontal rods 177 can also be configured to slide inward and/or outward and rotate sideways via corresponding rotating gears 179 (as shown in FIGS. 2 and 4).

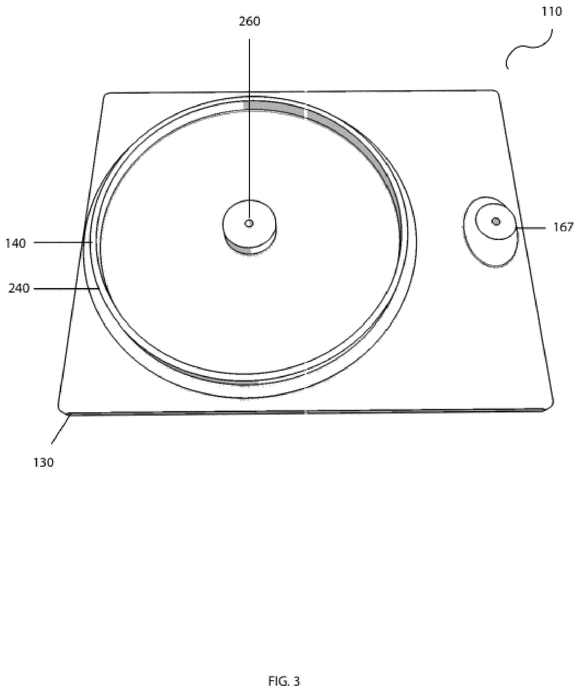

FIG. 3 illustrates the base assembly 110, without the template 150. According to embodiment of the present invention, the platform 140 can include a rim 240 that supports a rotating part 190 (shown in FIGS. 1 and 2). The rim 240 can, preferably, have a height of 1 cm. The rotating part 190 can have a circular form with a central opening (not shown) for the rod 160. The rotating part 190 is configured to rotate about a longitudinal axis. Preferably, the rotating part 190 can have a diameter of approximately 14 cm to 16 cm. The template 150 can then be placed on top of the rotating part 190. A rod support 260, to support the rod 160, can also be provided.

FIG. 4 illustrates in more detail the slider tool (or piece) 170 of the slide assembly 120 according to embodiment of the present invention. In particular, the slider tool (or piece) 170 has a slider platform 180. The slider platform 180 is provided with rotating gears 179 that movably attached to the slider platform and constructed with the side openings 178. The side openings 178 are configured to receive the horizontal rods 177. The side openings 178 have a diameter that corresponds to the diameter of the horizontal rods 177 such that the horizontal rods 178 can slide inward and outward, yet be able to securely remain in a position without any ancillary movement. A tightener 185 for securing the horizontal rods 177 in a predetermined position can also be provided.

In addition, a screw assembly 250 can be provided to secure a position of the slider tool (or piece) 170 on the slider pole 165. Any known configuration of the screw assembly 250 can be used that will allow to hold the slider tool (or piece) 170 fixedly on the slider pole 165, and allow the manipulation of the horizontal rods 177 inward and/or outward and/or sideways. According to embodiment of the present invention, the screw assembly can use M3 Hexagonal nut (not shown).

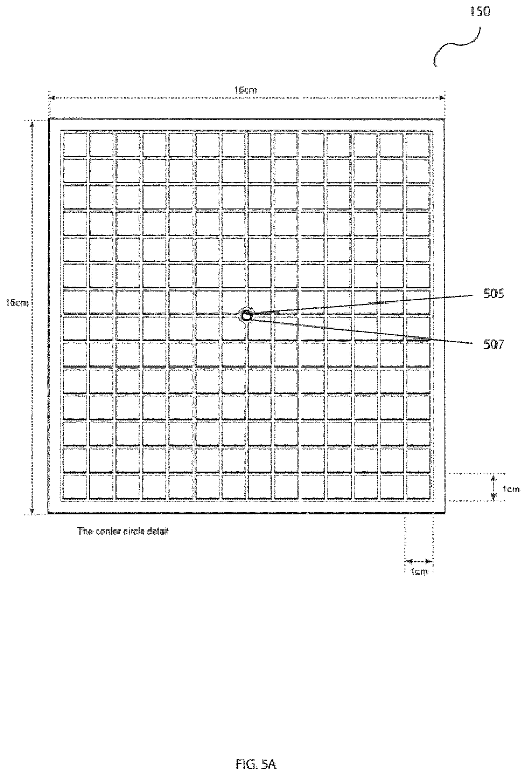

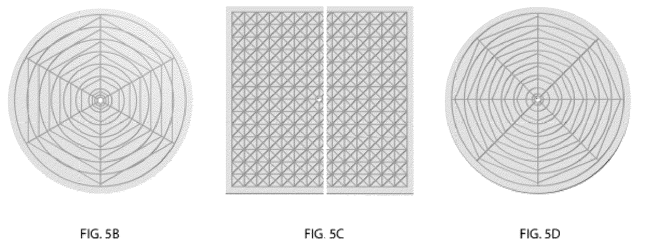

FIGS. 5A-5C illustrate various embodiments of the template 150. The template 150 can be made from silicon or any other flexible, non-adhesive and heat-resistant material. The template 150 can be any geometric form. According to embodiment of the present invention, the template 150, preferably, has a circular or square form. The thickness of the template is preferably 5 millimeters (mm).

The template 150 incorporates grooves 550 of various geometric and/or non-geometric shapes.

For example, FIGS. 5A-5C illustrate several groove configurations that can be used to build 3D objects when operating the system 100 of the present invention.

As shown in FIG. 5A, the template 150 has a template opening 505 for the rod 160. The template opening 505 can have a raised wall 507 around the opening 505 to improve the alignment and precision of the 3D objects.

The groves 550 act as forming crucibles for the 2D shapes of the 3D design. When the melted plastic filament, stretched by the 3D drawing pen inside the grooves 550 of the template 150, hardens, the hardened plastic can be then extracted by flexing the template 150. The flexibility of the template 150 allows a user to bend the template 150 thereby extracting the plastic 2D object formed in the grooves 550.

The detailed description of using the template 150 in conjunction with a 3D drawing pen, to extrude plastic filament, and use "fuse and join area" to build various 3D objects was disclosed in the U.S. Patent 11, 123,901 B2.

According to embodiment of the present invention, the system 100 allows the user to place the template 150 on the rod 160 of the rotating platform 140 through the template opening 505. The 2D shapes formed using the 3D drawing pen can then be stacked concentrically using the rod 160 in the center of the rotating part 190.

The horizontal rods 177 of the slider assembly 120 can be employed to layer the 2D shapes at various heights using the slidable slider piece 170, so that the user can gradually guild perfectly aligned 3D object. The horizontal rods 177 can temporarily hold the consecutive 2D shape layers of previously printed shapes at specific height in order to fuse them with filling layers in between.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form described. Many modifications and variations will be apparent to those of ordinary skill in the art without departing from the scope of the invention as defined by the appended claims. The embodiment was chosen and described in order to best explain the principles of the invention and the practical application, and to enable others of ordinary skill in the art to understand the invention for various embodiments with various modifications as are suited to the particular use contemplated without departing from the scope of the appended claims.

## Claims

1. A system (100) for creating three-dimensional, 3D, object from a template (150), the system comprising:
a base assembly (110), wherein the base assembly comprises:
a frame (130);
a platform (140) on top of the frame, the platform is configured to rotate about a longitudinal axis; and
a rod (160) vertically protruding from the platform; and
a slider assembly (120), wherein the slider assembly comprises:
a slider pole (165) securely fixed to the frame;
a slider tool (170) slidably and rotatably affixed to the slider pole through a central opening;
at least two horizontal rods (177) configured to slide horizontally through corresponding side openings (178); and
a tightener (185) for securing the horizontal rods in a predetermined position,
wherein the template is configured to be placed on the platform to allow creating the 3D object by using a 3D pen by stacking two-dimensional, 2D, shapes printed by the 3D pen from the template and securing the 2D shapes by means of the slider assembly to allow the 2D shapes to be fused with a filling layer from the template.

2. The system according to claim 1, wherein the template is made from a non-sticky, heat-resistant, and transparent material.

3. The system according to claim 1, wherein the template comprises grooves (550) that form geometric and/or non-geometric shapes.

4. The system according to claim 1, wherein the template comprises a template opening, which is centrally located, and the template opening is surrounded by a raised wall (507).

5. The system according to claim 1, wherein the slider pole comprises ruler markings.

6. The system according to claim 1, wherein the frame has a rectangular shape.

7. The system according to claim 1, wherein the platform further comprises a rim (240) that supports a rotating part.

8. The system according to claim 1, wherein the slider tool further comprises a slider platform (180);
rotating gears movably attached to the slider platform thereby allowing the horizontal rods to rotate sideways; and
the tightener for securing the horizontal rods.

9. The system according to claim 3, wherein the template comprises grooves forming at least one predetermined shape defined by five concentric triangular path grooves with a straight line groove crossing vertically a center of the five triangular path grooves.

10. A method for creating three-dimensional, 3D, object from a template (150), the method comprising:
placing the template on a rotatable platform (140);
creating two-dimensional, 2D, shapes by use of a 3D pen from the template by rotating the template via the rotatable platform;
placing concentrically the 2D shapes about a rod (160) vertically protruding from the rotatable platform;
securing the 2D shapes by a slider assembly (120), wherein the slider assembly comprises:
a slider pole (165) securely fixed to the frame;
a slider tool (170) slidably and rotatably affixed to the slider pole through a central opening; and
at least two horizontal rods (177) configured to slide horizontally through corresponding side openings, and
fusing the 2D shapes a filling layer from the template to create the 3D object.

11. The method of claim 10, wherein the template comprises silicon.

12. The method of claim 10, wherein the template comprises grooves (550) that form geometric and/or non-geometric shapes.

13. The method of claim 10, wherein the template comprises a template opening, which is centrally located, and the template opening is surrounded by a raised wall (507).

14. The method of claim 10, wherein the slider tool further comprises a slider platform (180);
rotating gears movably attached to the slider platform thereby allowing the horizontal rods to rotate sideways; and
a tightener for securing the horizontal rods.

15. The method of claim 12, wherein the template comprises grooves forming at least one predetermined shape defined by five concentric triangular path grooves with a straight line groove crossing vertically a center of the five triangular path grooves.

## Patentansprüche

1. Ein System (100) zur Erzeugung dreidimensionaler 3D-Objekte aus einer Schablone (150), wobei dasSystem Folgendes umfasst:
eine Basisanordnung (110), wobei die Basisanordnung Folgendes umfasst:
einen Rahmen (130);
eine Plattform (140) auf dem Rahmen, die so konfiguriert ist, dass sie sich um eine Längsachse dreht; und
einen senkrecht aus der Plattform herausragende Stab (160); und
eine Schieberanordnung (120), wobei die Schieberanordnung Folgendes umfasst:
eine am Rahmen fest angebrachte Schiebestange (165);
ein Schieberwerkzeug (170), das durch eine zentrale Öffnung verschiebbar und drehbar an der Schieberstange befestigt ist;
mindestens zwei horizontale Stäbe (177), die so konfiguriert sind, dass sie horizontal durch entsprechende seitliche Öffnungen (178) gleiten können; und
eine Spannvorrichtung (185) zum Fixieren der horizontalen Stangen in einer vorgegebenen Position,
wobei die Schablone so konfiguriert ist, dass sie auf der Plattform platziert werden kann, um das 3D-Objekt mithilfe eines 3D-Stifts zu erstellen, indem zweidimensionale (2D) Formen, die mit dem 3D-Stift von der Schablone gedruckt werden, übereinandergestapelt und die 2D-Formen mittels der Schieberbaugruppe gesichert werden, sodass die 2D-Formen mit einer Füllschicht von der Schablone verschmolzen werden können.

2. Das System nach Anspruch 1, wobei die Schablone aus einem nicht klebenden, hitzebeständigen und transparenten Material besteht.

3. Das System nach Anspruch 1, wobei die Schablone Nuten (550) aufweist, die geometrische und/oder nicht-geometrische Formen bilden.

4. Das System nach Anspruch 1, wobei die Schablone eine mittig angeordnete Schablonenöffnung aufweist, die von einer erhöhten Wand (507) umgeben ist.

5. Das System nach Anspruch 1, wobei die Schiebestange mit Skalenmarkierungen versehen ist.

6. Das System nach Anspruch 1, wobei der Rahmen eine rechteckige Form aufweist.

7. Das System nach Anspruch 1, wobei die Plattform ferner einen Rand (240) aufweist, der ein drehbares Teil trägt.

8. Das System nach Anspruch 1, wobei das Schiebewerkzeug ferner eine Schiebeplattform (180) umfasst;
drehbare Zahnräder, die beweglich an der Gleitplattform befestigt sind und dadurch die seitliche Drehung der horizontalen Stangen ermöglichen; und
die Spannvorrichtung zum Sichern der horizontalen Stangen.

9. Das System nach Anspruch 3, wobei die Schablone Nuten umfasst, die mindestens eine vorgegebene Form bilden, die durch fünf konzentrische dreieckige Führungsnuten und eine gerade Führungsnut, die vertikal durch den Mittelpunkt der fünf dreieckigen Führungsnuten verläuft, definiert ist.

10. Ein Verfahren zur Erzeugung eines dreidimensionalen 3D-Objekts aus einer Schablone (150), wobei das Verfahren Folgendes umfasst:
Anordnen der Schablone auf einer drehbaren Plattform (140);
Erstellung zweidimensionaler (2D) Formen mithilfe eines 3D-Stifts unter Verwendung der Schablone durch das Drehen der Schablone über die drehbare Plattform;
Konzentrisches Anordnen der 2D-Formen um einen senkrecht aus einer drehbaren Plattform herausragenden Stab (160); .
Sicherung der 2D-Formenmittels einer Schieberanordnung (120) wobei die Schieberanordnung Folgendes umfasst:
eine am Rahmen fest angebrachte Schiebestange (165);
ein Schiebewerkzeug (170), das durch eine zentrale Öffnung verschiebbar und drehbar an der Schieberstange befestigt ist; und
mindestens zwei horizontale Stäbe (177), die so konfiguriert sind, dass sie horizontal durch entsprechende seitliche Öffnungen gleiten können, und
die Entstehung des 3D-Objekts durch das Verschmelzen der 2D-Formen mit einer Füllschicht aus der Schablone

11. Das Verfahren nach Anspruch 10, wobei die Schablone aus Silizium besteht.

12. Das Verfahren nach Anspruch 10, wobei die Schablone Nuten (550) umfasst, die geometrische und/oder nicht-geometrische Formen bilden.

13. Das Verfahren nach Anspruch 10, wobei die Schablone eine mittig angeordnete Schablonenöffnung umfasst, die von einer erhöhten Wand (507) umgeben ist.

14. Das Verfahren nach Anspruch 10, wobei das Schieberwerkzeug ferner eine Schieberplattform (180) umfasst;
drehbare Zahnräder, die beweglich an der Gleitplattform befestigt sind und dadurch die seitliche Drehung der horizontalen Stangen ermöglichen; und
eine Spannvorrichtung zum Sichern der horizontalen Stangen.

15. Das Verfahren nach Anspruch 12, wobei die Schablone Nuten umfasst, die mindestens eine vorgegebene Form bilden, welche durch fünf konzentrische dreieckige Führungsnuten und eine gerade Führungsnut, die vertikal durch den Mittelpunkt der fünf dreieckigen Führungsnuten verläuft, definiert ist.

## Revendications

1. Un système (100) pour créer un objet tridimensionnel (3D) à partir d'un gabarit (150), le système comprenant :
un ensemble de base (110), dans lequel l'ensemble de base comprend :
un cadre (130);
une plateforme (140) placée au-dessus du cadre, cette plateforme est configurée pour pivoter autour d'un axe longitudinal ; et
une tige (160) faisant saillie verticalement de la plateforme ; et
un ensemble coulissant (120), dans lequel l'ensemble coulissant comprend :
une perche coulissante (165) solidement fixée au cadre ;
un outil coulissante (170) fixé de manière coulissante et rotative à perche coulissante à travers une ouverture centrale ;
au moins deux tiges horizontales (177) configurées pour coulisser horizontalement à travers des ouvertures latérales correspondantes (178) ; et
un dispositif de serrage (185) pour fixer les tiges horizontales dans une position prédéterminée,
dans lequel le gabarit est configuré pour être placé sur la plateforme afin de permettre la création de l'objet 3D à l'aide d'un stylo 3D en empilant des formes bidimensionnelles, 2D, imprimées par le stylo 3D à partir du gabarit et en fixant les formes 2D au moyen de l'ensemble coulissant pour permettre aux formes 2D d'être fusionnées avec une couche de remplissage provenant du gabarit.

2. Le système selon la revendication 1, dans lequel le gabarit est fabriqué à partir d'un matériau non collant, résistant à la chaleur et transparent.

3. Le système selon la revendication 1, dans lequel le gabarit comprend des rainures (550) qui forment des formes géométriques et/ou non géométriques.

4. Le système selon la revendication 1, dans lequel le gabarit comprend une ouverture de gabarit, qui est située au centre, et l'ouverture de gabarit est entourée d'une paroi surélevée (507).

5. Le système selon la revendication 1, dans lequel la perche coulissante comprend des graduations de règle.

6. Le système selon la revendication 1, dans lequel le cadre a une forme rectangulaire.

7. Le système selon la revendication 1, dans lequel la plateforme comprend en outre un rebord (240) qui supporte une pièce rotative.

8. Le système selon la revendication 1, dans lequel l'outil coulissante comprend en outre une plateforme coulissant (180) ;
des engrenages rotatifs fixés de manière mobile à la plateforme coulissante, permettant ainsi aux tiges horizontales de pivoter latéralement ; et
le dispositif de serrage pour fixer les tiges horizontales.

9. Le système selon la revendication 3, dans lequel le gabarit comprend des rainures formant au moins une forme prédéterminée définie par cinq rainures triangulaires concentriques avec une rainure en ligne droite traversant verticalement le centre des cinq rainures triangulaires.

10. Le procédé de création d'un objet tridimensionnel (3D) à partir d'un gabarit (150), le procédé comprenant :
placer le gabarit sur une plateforme rotative (140) ;
créer formes bidimensionnelles, 2D, à l'aide d'un stylo 3D à partir du gabarit en faisant pivoter ce dernier via la plateforme rotative ;
disposer concentriquement les formes 2D autour d'une tige (160) faisant saillie verticalement de la plateforme rotative ;
fixer les formes 2D par un ensemble coulissant (120), dans lequel l'ensemble coulissant comprend :
une perche coulissante (165) solidement fixée au cadre ;
un outil coulissante (170) fixé de manière coulissante et rotative à la perche coulissante à travers une ouverture centrale ; et
au moins deux tiges horizontales (177) configurées pour coulisser horizontalement à travers des ouvertures latérales correspondantes, et
fusionner les formes 2D et une couche de remplissage du gabarit pour créer l'objet 3D.

11. Le procédé selon la revendication 10, dans lequel le gabarit comprend du silicium.

12. Le procédé selon la revendication 10, dans lequel le gabarit comprend des rainures (550) qui forment des formes géométriques et/ou non géométriques.

13. Le procédé selon la revendication 10, dans lequel le gabarit comprend une ouverture de gabarit, qui est située au centre, et l'ouverture de gabarit est entourée d'une paroi surélevée (507).

14. Le procédé selon la revendication 10, dans lequel l'outil coulissante comprend en outre une plateforme coulissante (180) ;
des engrenages rotatifs fixés de manière mobile à la plateforme coulissante, permettant ainsi aux tiges horizontales de pivoter latéralement ; et
un dispositif de serrage pour fixer les tiges horizontales.

15. Le procédé selon la revendication 12, dans lequel le gabarit comprend des rainures formant au moins une forme prédéterminée définie par cinq rainures triangulaires concentriques avec une rainure en ligne droite traversant verticalement le centre des cinq rainures triangulaires.
